# EUROPÄISCHE PATENTSCHRIFT

(11) **EP 1 952 518 B1**
(45) Veröffentlichungstag und Bekanntmachung des Hinweises auf die Patenterteilung: **10.01.2018**
(21) Anmeldenummer: 05813642.5
(22) Anmeldetag: 23.11.2005
(51) Int. Cl.: H02M 3/155, H02J 7/00, H01M 2/10

(54) **AKKUMULATOR ZUM VERBINDEN MIT EINEM VERBRAUCHER**
RECHARGEABLE BATTERY FOR CONNECTION TO A LOAD
ACCUMULATEUR À CONNECTER AVEC UN RÉCEPTEUR

(43) Veröffentlichungstag der Anmeldung: 06.08.2008
(73) Patentinhaber: Metabowerke GmbH, 72622 Nürtingen (DE)
(72) Erfinder: WIESNER, Bernd, 73277 Owen (DE); GRÄBER, Jochen, 73266 Bissingen (DE)
(74) Vertreter: Markfort, Iris-Anne Lucie
(86) Internationale Anmeldenummer: PCT/EP2005/012513
(87) Internationale Veröffentlichungsnummer: WO 2007/059784

(56) Entgegenhaltungen:
- US-A- 5 656 876
- US-A- 5 675 232
- US-B1- 6 324 339

## Beschreibung

Die Erfindung betrifft einen Akkumulator zum Verbinden mit einem Verbraucher, insbesondere zum Versorgen eines Elektrowerkzeuggerätes mit elektrischer Energie, umfassend ein Akkugehäuse sowie darin angeordnete Akkuzellen und eine Elektronikeinheit.

Bei Elektrowerkzeuggeräten mit Akkumulatoren, bei denen die Akkumulatoren mechanisch und elektrisch mit dem Elektrowerkzeuggerät verbunden werden und so die elektrische Energie zum Antrieb eines Werkzeugs liefern, ist es im Stand der Technik bekannt, über Schalter an dem Elektrowerkzeuggerät eine Elektronik zu beeinflussen, die über Pulsweitenmodulation die Leistung des Elektrowerkzeuggerätes regelt. Diese Elektroniken zur Leistungsregelung sind dabei Teil des Elektrowerkzeuggerätes.

Übliche Elektrowerkzeuggeräte arbeiten dabei mit einer Spannung von 12 V, die durch die Akkumulatoren geliefert wird.

Seit neuestem sind jedoch auch 18 V Lithiumakkupacks bekannt, die in Elektrowerkzeuggeräten eingesetzt werden und eine erhöhte Leistung bereitzustellen vermögen. Das Dokument US6,324,339 B1 zeigt einen Akkumulator gemäss dem vorzeichnenden Teil des Anspruchs 1. Es ist nun Aufgabe der Erfindung, einen Akkumulator bereitzustellen, der es ermöglicht, auch Akkumulatoren mit einer eigenen anderen Nenn-Spannung als die benötigte Spannung des Elektrohandwerkzeugs mit einem solchen einsetzbar zu machen.

Die Erfindung löst diese Aufgabe durch einen Akkumulator der gattungsgemäßen Art, bei dem die Elektronikeinheit eine Einheit zur Pulsweitenmodulation zur Erzeugung verschiedener Spannungslagen umfasst, und bei dem ein Schalter vorgesehen ist, über den die verschiedenen Spannungslagen einstellbar sind. Auf diese Weise kann erreicht werden, dass Akkupacks beispielsweise 18 V Akkupacks oder Akkumulatoren auf beispielsweise 12 V, was der Spannung des zugehörigen Elektrowerkzeuggerätes entspricht, heruntergeregelt werden, so dass es nicht zu einer Zerstörung sowohl des Akkumulators als auch des Elektrowerkzeuggerätes kommt. Auf diese Weise wird gewährleistet, dass neuere Akkupacks mit einer höheren Spannung mit älteren Elektrowerkzeuggeräten verwendet werden können. Auf der anderen Seite können sie jedoch auch mit der vollen Spannung in neueren Geräten eingesetzt werden. Auf diese Weise kann dem Gedanken der Wiederverwertbarkeit oder Weiterverwendbarkeit von Elektrowerkzeuggeräten Rechnung getragen werden.

Dabei bieten Akkumulatoren mit bereits ohnehin vorhandener Elektronik, wie sie beispielsweise in Lithiumionenakkus vorhanden ist, um den Ladezustand der einzelnen Akkuzellen sowohl beim Be- als auch beim Entlagen zu bestimmen und zu regeln, den Vorteil, auf bereits bestehende Bauelemente zurückgreifen zu können. Die bereits vorhandene Elektronik kann darüber hinaus eine Pulsweitenmodulation zur Erzeugung verschiedener Spannungslagen umfassen, ohne dass weitere separate Bauteile vorhanden sein müssen, die das ohnehin begrenzten Platzangebot in einem Akkumulator, wie er in einem Elektrowerkzeuggerät eingesetzt wird, weiter begrenzen. Darüber hinaus sollen derartige Akkumulatoren auch ein möglichst geringes Gewicht und möglichst geringe Abmessungen aufweisen, um in Verbindung mit einem Elektrowerkzeuggerät oder einem anderen Verbraucher eine besonders einfache Einsetzbarkeit und geringstmögliche Belastung des Verwenders des Verbrauchers zu gewährleisten. Erfindungsgemäss ist ein Schalter am Akkumulator vorgesehen über den die verschiedenen Spannungslagen einstellbar sind. Dabei kann sowohl eine kontinuierliche Verstellung als auch eine Verstellung in diskreten Stufen erfolgen. So kann insbesondere vorgesehen sein, dass über einen Potentiometer eine stufenlose Verstellung der Spannungen realisiert werden kann. Alternativ kann jedoch auch vorgesehen sein, lediglich zwei diskrete Spannungslagen anzufahren, wie beispielsweise 12 und 18 V, die die herkömmlichen Spannungen für akkumulatorbetriebene Verbraucher darstellen.

Es kann des Weiteren vorgesehen sein, dass ein erstes Schalterelement am Akkugehäuse und ein zweites hiermit korrespondierendes Schalterelement an einem zugeordneten Verbraucher angebracht ist, wobei beim Verbinden von Akkumulator und Verbraucher die Spannungslage des Verbrauchers einstellbar ist. Auf diese Weise kann erreicht werden, dass seitens eines Benutzers des Verbrauchers keinerlei zusätzlichen Aktionen notwendig werden. Insbesondere muss nicht seitens des Benutzers eine Verstellung des Schalters vorgenommen werden. Auf diese Weise kann erreicht werden, dass Fehlerquellen weiter ausgeschlossen werden. Insbesondere kann seitens des Benutzers des Verbrauchers nicht die Einstellung auf die nötige Spannung vergessen werden, wodurch es dann zu Fehlern bzw. Beschädigungen des Akkumulators oder des Elektrowerkzeuggerätes oder eines anderen Verbrauchers kommen kann.

Des Weiteren umfasst die Erfindung ein Elektrowerkzeuggerät, das mit einem Akkumulator nach einem der vorstehenden Ansprüche mechanisch und elektrisch verbindbar ist. Derartige Elektrowerkzeuggeräte, wie beispielsweise Schlagbohrer, Bohrmaschinen, Schrauber etc. für den Heim- und Handwerkerbedarf werden zunehmend auch als Akkugeräte bereitgestellt, da diese eine höhere Flexibilität beim Arbeiten und insbesondere eine Unabhängigkeit von einer vorhandenen Stromquelle ermöglichen und somit insbesondere auch Außenarbeiten vielerorts durchgeführt werden können. Dabei weisen derartige Akkugeräte, die einen wiederaufladbaren Akkumulator in einem Akkugehäuse umfassen, das mit dem Gerätegehäuse des Elektrowerkzeuggeräts koppelbar ist, wobei beim Koppeln der beiden Gehäuse der Motor elektrisch an den Akkupack angekoppelt und darüber mit Strom versorgt wird, gewöhnlich zum Koppeln der beiden Gehäuse eine Verrastvorrichtung auf, wobei die elektrische Kontaktierung vielfach im Bereich der Verrastvorrichtung erfolgt. Bei einem derartigen Elektrowerkzeuggerät kann darüber hinaus vorgesehen sein, dass eine Codierung für eine erforderliche Spannung vorgesehen ist, die beim elektrischen und/oder mechanischen Verbinden mit dem Akkumulator von diesem erkennbar ist, so dass die Pulsweite im Akkumulator entsprechend einstellbar ist. Es ist dabei besonders bevorzugt, wenn die eingesetzten Akkuzellen Lithiumionenakkuzellen sind, die eine erheblich größere Leistung und auch Lebensdauer als herkömmliche Nickelcadmiumzellen bereitstellen.

Die Erfindung soll im Folgenden anhand einer Zeichnung näher erläutert werden. Dabei zeigen:
Figur 1 einen Akkupack ohne Gehäuse und
Figur 2 einen Akkupack.

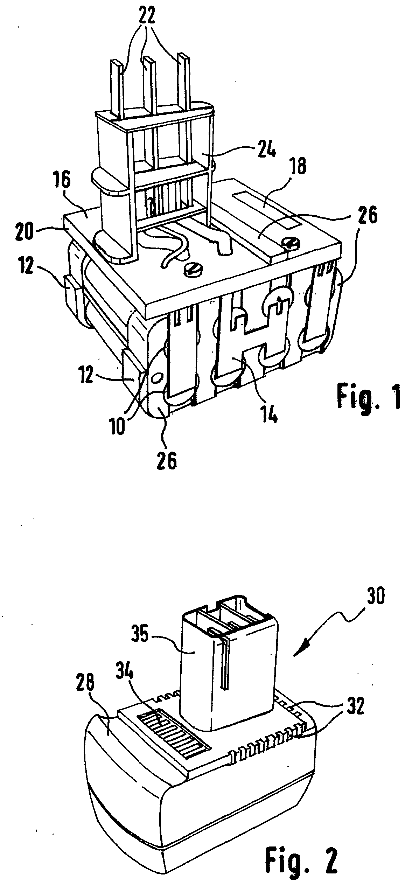

Figur 1 zeigt einen Akkupack ohne Gehäuse mit einem Verbund aus mehreren Akkuzellen, die hier mit dem Bezugszeichen 10 versehen sind, einem sogenannten Corepack sowie der hierzu gehörenden Elektronik. Die einzelnen Akkuzellen 10 sind dabei über Abstandhalter 12 voneinander beabstandet gelagert, so dass es nicht zu einer Berührung der einzelnen Akkuzellen 10 untereinander kommt, wodurch Kurzschlüsse verursacht werden können. In der vorgesehenen Gestaltung sind acht Akkuzellen vorgesehen, wobei jeweils zwei Akkuzellen zueinander parallel geschaltet sind und vier parallel geschaltete Akkuzellenpaare in Reihe hintereinander geschaltet wurden. Durch die Parallelschaltung der hier verwendeten Lithiumakkuzellen 10 kann die Abgabeleistung verdoppelt werden. Die elektronische Kontaktierung der Akkuzellen 10 erfolgt über Kontaktelemente 14. Die Akkuzellen 10 werden dann über die Haltevorrichtung 12 auf der Elektronikeinheit 16 formschlüssig festgelegt und die Zellen werden verschweißt. Zum Prüfen der Einheit nach dem so erfolgten Konfektionieren ist eine Testschnittstelle 18 vorgesehen. Die Testschnittstelle 18 ist später durch das Akkugehäuse abgedeckt.

Die Elektronik 16 für den Corepack bestehend aus Akkuzellen 10 und Abstandhalter 12 ist in einem Kunststoffbauteil 20, dem sogenannten Elektronikbecher, vergossen und vor äußeren Einflüssen geschützt. Die Elektronikeinheit ist dabei ebenfalls innerhalb des Akkugehäuses (nicht dargestellt) untergebracht. Aus der Elektronikeinheit ragen lediglich die Anschlusselemente zum Anschließen der Elektronikeinheit an die Akkuzellen 10 heraus.

Zum Verbinden eines Akkupacks mit einem Akkuwerkzeuggerät ist ein Kontaktsystem 22 vorgesehen, das drei Anschlüsse aufweist sowie einen digitalen Dataport. Das Kontaktsystem ist in einer Verbindungseinrichtung 24 geführt, die später durch das Gehäuse des Akkupacks überdeckt wird und in eine entsprechende Ausnehmung eines Elektrowerkzeuggerätes eingreift.

Figur 2 zeigt nun einen Akkupack, der in seiner Gesamtheit mit 30 bezeichnet ist mit einem Gehäuse 28, in dem Lüftungsschlitze 32 für den Lufteintritt und 34 für den Luftaustritt vorgesehen sind, da der Akkupack 30 zur Erhöhung der Lebensdauer der Akkuzellen 10 luftgekühlt wird. Das Kontaktsystem mit den Anschlüssen 22 wird ebenfalls vollständig in das Gehäuse 28 des Akkupacks 30 eingeschlossen, wobei durch das Gehäuse 28 des Akkupacks 30 eine Separierung und ein mechanischer Schutz der einzelnen Anschlüsse 22 sichergestellt wird. Mit dem Bereich 35 des Gehäuses wird der Akkupack bei Verwendung in eine entsprechende Aufnahme eines Elektrowerkzeuggerätes eingefügt und dort formschlüssig festgelegt.

Mittels der Elektronikeinheit 16, die im Elektronikbecher angeordnet ist und die eine entsprechende Einheit umfasst, kann nun eine Pulsweitenmodulation und hierüber eine Regelung der abzugebenden Leistung bzw. der anliegenden Spannung erfolgen. Über die Pulsweitenmodulation wird die vom Akku gelieferte Gleichspannung in einzelne Pulse zerlegt, wobei über die einzelnen Pulse bei stets gleicher Pulshöhe die abzugebende Leistung und hierüber die Spannung, die anliegt, geregelt wird. Das Prinzip der Pulsweitenmodulation ist Stand der Technik.

Durch die Vorsehung einer Einheit zur Pulsweitenmodulation im Elektronikbecher kann nun erreicht werden, dass ein Akkupack, der als Lithiumakkupack mit 18 V arbeitet, auf 12 V heruntergeregelt werden kann und so in einer herkömmlichen 12 V Akkumaschine verwendet werden kann, ohne dass der Motor des Elektrowerkzeuggerätes hierbei Schaden nimmt. Dabei ist am Akkupack ein Schalter (nicht dargestellt), mit dem eine Umschaltung von 18 V auf 12 V und umgekehrt realisiert werden kann, wobei das Schalten bewirkt, dass die Pulsweitenmodulation entsprechend angesteuert wird bzw. eine entsprechende Modulation stattfindet.

Auf die vorstehend beschriebene Weise kann besonders einfach eine Leistungsregelung erfolgen, die eine Anpassung eines Akkus an verschiedene Geräte ermöglicht.

## Patentansprüche

1. Akkumulator zum Verbinden mit einem Verbraucher, insbesondere zum Versorgen eines Elektrohandwerkzeuggerätes mit elektrischer Energie umfassend ein Akkugehäuse (28) sowie darin angeordnete Akkuzellen (10) und Elektronikeinheit (16), wobei die Elektronikeinheit (16) eine Einheit zur Pulsweitenmodulation zur Erzeugung verschiedener Spannungslagen umfasst, **dadurch gekennzeichnet, dass** ein Schalter vorgesehen ist, über den die verschiedenen Spannungslagen einstellbar sind.

2. Akkumulator nach Anspruch 1, **dadurch gekennzeichnet, dass** die Einstellung der Spannungslagen kontinuierlich erfolgt.

3. Akkumulator nach Anspruch 1, **dadurch gekennzeichnet, dass** die Einstellung der Spannungslagen in diskreten Stufen erfolgt.

4. Akkumulator nach einem der vorangehenden Ansprüche, **dadurch gekennzeichnet, dass** ein erstes Schalterelement am Akkugehäuse (28) und ein zweites hiermit korrespondierendes Schalterelement an einem zugeordneten Verbraucher angebracht ist, wobei beim Verbinden von Akkumulator (30) und Verbraucher, die Spannungslage des Verbrauchers einstellbar ist.

5. Akkumulator nach einem der vorangehenden Ansprüche, **dadurch gekennzeichnet, dass** die Akkuzellen (10) Lithiumzellen sind.

6. Elektrohandwerkzeuggerät, das mit einem Akkumulator (30) nach einem der vorstehenden Ansprüche mechanisch und elektrisch verbunden ist.

7. Elektrohandwerkzeuggerät nach Anspruch 6, **dadurch gekennzeichnet, dass** am Elektrohandwerkzeuggerät eine Codierung für die erforderliche Spannung vorgesehen ist, die beim elektrischen und/oder mechanischen Verbinden mit dem Akkumulator von diesem erkennbar ist, so dass die Pulsweite entsprechend modulierbar ist.

## Claims

1. Rechargeable battery for connection to a load, in particular for supplying a hand-held electric power tool with electrical energy comprising a rechargeable battery housing (28) and rechargeable battery cells (10) which are arranged therein, and an electronic unit (16), wherein the electronic unit (16) comprises a unit for pulse width modulation for generating various voltages, **characterized in that** a switch is provided by means of which the various voltages can be adjusted.

2. Rechargeable battery according to Claim 1, **characterized in that** the voltages are adjusted continuously.

3. Rechargeable battery according to Claim 1, **characterized in that** the voltages are adjusted in discrete stages.

4. Rechargeable battery according to one of the preceding claims, **characterized in that** a first switch element is mounted on the rechargeable battery housing (28), and a second switch element, corresponding thereto, is mounted on an assigned load, wherein the voltage of the load can be adjusted when the rechargeable battery (30) and load are connected.

5. Rechargeable battery according to one of the preceding claims, **characterized in that** the rechargeable battery cells (10) are lithium cells.

6. Hand-held electric power tool which is mechanically and electrically connected to a rechargeable battery (30) according to one of the preceding claims.

7. Hand-held electric power tool according to Claim 6, **characterized in that** a coding for the necessary voltage is provided on the hand-held electric power tool, which voltage can be detected by the rechargeable battery when electrical and/or mechanical connection thereto takes place, with the result that the pulse width can be correspondingly modulated.

## Revendications

1. Accumulateur pour assurer le couplage avec un utilisateur, en particulier pour approvisionner un appareil d'outillage électromécanique avec de l'énergie électrique, comportant un boîtier d'accumulateur (28) ainsi que des cellules accumulatrices (10) disposées à l'intérieur et une unité électronique (16), dans lequel l'unité électronique (16) comporte une unité pour engendrer différentes modulations de largeur d'impulsion pour générer différents états de tensions, **caractérisé en ce qu'**un connecteur est prévu, par lequel les différents états de tensions sont réglables.

2. Accumulateur selon la revendication 1, **caractérisé en ce que** le réglage des états de tensions s'effectue de façon continue.

3. Accumulateur selon la revendication 1, **caractérisé en ce que** le réglage des états de tensions s'effectue selon des phases discrètes.

4. Accumulateur selon l'une des revendications précédentes, **caractérisé en ce qu'**un premier élément de connexion est monté au boîtier d'accumulateur (28) et un deuxième élément de connexion lui correspondant est monté chez un utilisateur approprié, dans lequel, lors de la connexion de l'accumulateur (30) et de l'utilisateur, l'état de tension de l'utilisateur est réglable.

5. Accumulateur selon l'une des revendications précédentes, **caractérisé en ce que** les cellules accumulatrices (10) sont des cellules au lithium.

6. Appareil d'outillage électromécanique, qui est connecté mécaniquement et électriquement avec un accumulateur (30) selon l'une des revendications précédentes.

7. Appareil d'outillage électromécanique, selon la revendication 6, **caractérisé en ce que** l'appareil d'outillage électromécanique est pourvu d'un codage qui correspond à la tension appropriée, qui, lors du raccordement électrique ou mécanique avec l'accumulateur peut être reconnu par ce dernier, de sorte que la phase d'impulsion puisse être modulée de manière appropriée.
